# EUROPÄISCHE PATENTSCHRIFT

(11) **EP 2 241 772 B1**
(45) Veröffentlichungstag und Bekanntmachung des Hinweises auf die Patenterteilung: **18.09.2013**
(21) Anmeldenummer: 10004081.5
(22) Anmeldetag: 16.04.2010
(51) Int. Cl.: F16C 33/20, F16C 33/32, F16C 33/62

(54) **Lageranordnung mit Lagerelement aus Eltimid**
Bearing assembly with bearing element made of eltimid
Agencement de stockage doté d'un élément de stockage en Eltimid

(30) Priorität: 16.04.2009 DE 102009002425
(43) Veröffentlichungstag der Anmeldung: 20.10.2010
(73) Patentinhaber: Albert Handtmann Elteka GmbH & Co. KG, 88400 Biberach (DE)
(72) Erfinder: Vollmann-Schipper, Jörg, 89362 Offingen (DE)
(74) Vertreter: Müller Schupfner & Partner

(56) Entgegenhaltungen:
- "Geringere Kosten durch Hochleistungskunststoffe" KE KONSTRUKTION & ENGINEERING Bd. 03/2009, 1. März 2009 (2009-03-01), Seiten S. 44-S. 45,, XP002590567 86899 Landsberg/Lech Gefunden im Internet: URL:http://imperia.mi-verlag.de/imperia/md /content/ai/kon/fachartikel/ke/2009/03/ke0 9_03_044.pdf [gefunden am 2010-07-06]
- DATABASE REGISTRY [Online] CHEMICAL ABSTRACTS SERVICE, COLUMBUS, OHIO, US 15 März 2005 'CAS 845621-44-5' Retrieved from STN

## Beschreibung

Die vorliegende Erfindung betrifft eine Lageranordnung mit zumindest einem ersten Lagerelement und einem relativ zum ersten Lagerelement beweglichen zweiten Lagerelement gemäß dem Oberbegriff des Anspruchs 1. Ferner betrifft die Erfindung ein Verfahren zur Herstellung einer solchen Lageranordnung sowie die Verwendung von Eltimid für die Herstellung zumindest eines Teils einer solchen Lageranordnung.

Für solche Lageranordnungen gibt es eine Reihe von unterschiedlichen Voraussetzungen, je nach Einsatzzweck, die unterschiedliche Materialeigenschaften bedingen. So existieren bereits Kugellager für industrielle Anwendungen aller Art, die neben entsprechenden Laufringen aus Wälzlagerstahl Wälzkörper aus einem keramischen Werkstoff aufweisen (sogenannte Hybridlager), die gegenüber Wälzkörpern aus Wälzlagerstahl bestimmte verbesserte Eigenschaften aufweisen. Beispielsweise ist unter den technischen Keramikwerkstoffen das Siliziumnitrid Si₃N₄ aufgrund seiner mechanischen und physikalischen Eigenschaften ein für Wälzlager geeigneter Werkstoff. Dieser zeichnet sich unter anderem durch eine hohe Bruchfestigkeit, eine geringe Dichte und eine hohe Stromdurchschlagsfestigkeit aus. Diese Lager eignen sich beispielsweise für den Einsatz in elektrischen Maschinen. Wälzkörper aus Keramik haben gegenüber Wälzkörpern aus Stahl eine längere Gebrauchsdauer, sind relativ unempfindlich bei Mangelschmierung und eignen sich gut für Hochgeschwindigkeitslagerungen, da diese Wälzkörper eine geringere Dichte aufweisen als Wälzkörper aus Stahl.

Weitere wichtige Eigenschaften solcher Lagerelemente sind deren Gewicht, deren Verschleiß, der Resistenz gegenüber chemisch aktiven oder aggressiven Substanzen, die Zug- und Druckfestigkeit, der spezifische elektrische Widerstand, die Dichte und der Längenausdehnungskoeffizient. Ein sehr wichtiges Kriterium bei Lagerelementen ist auch der Herstellungsbereich, da es sich hier um Massenprodukte handelt, bei denen bereits geringste Preisvorteile zu erheblichen Marktvorteilen führen.

Bei bestimmten Einsatzzwecken von Lageranordnungen ist es erstrebenswert, auch bei solchen Konstellationen, in denen keine oder nur sehr schlechte Schmiermöglichkeiten vorhanden sind, trotz dieser Probleme mit der Schmierung ausreichend lange Standzeiten erzielen zu können, d. h. dennoch entsprechend gutes Verschleißverhalten mit entsprechend niedrigen Reibwerten zu erreichen.

Aus der DE 815 872 B sind Wälzlageranordnungen gemäß dem Oberbegriff des Anspruchs 1 bekannt.

Aus dem Zeitschriftenartikel "Geringere Kosten durch Hochleistungskunststoffe", KE KONSTRUKTION & ENGINEERING, Bd. 03/2009, 1. März 2009, S. 44-45, sind Lagerbuchsen und Gleitlager bekannt, bei denen Eltimid verwendet wird, wobei Eltimid ein aromatisches Polyimid mit der CAS-Nummer 845621-44-5 ist.

Zu den wesentlichen Eigenschaften entsprechender Lagerelemente zählen daher eine geringe Dichte und somit geringe Massenkräfte zur Erzielung hoher Drehzahlen, eine möglichst große Laufruhe, ein gutes Verschleißverhalten und ein kleiner Reibkoeffizient für möglichst widerstandsfreies Lagern.

Diese Aufgaben werden mit einer Wälzlageranordnung gemäß Anspruch 1, einem Verfahren zur Herstellung einer solchen Wälzlageranordnung gemäß Anspruch 8 sowie durch die Verwendung von Eltimid für die Herstellung zumindest eines Teils einer solchen Wälzlageranordnung gemäß Anspruch 9 gelöst. Vorteilhafte Weiterbildungen der Erfindung sind Gegenstand der abhängigen Ansprüche.

Erfindungsgemäß ist zumindest eines der Lagerelemente, welche die Lageranordnung bilden, aus Eltimid hergestellt. Es können auch mehrere oder sogar alle Bestandteile der Lageranordnung, d.h. Lagerelemente, aus Eltimid hergestellt sein. Der Kunststoff Eltimid wird von der Firma Albert Handtmann Elteka GmbH & Co. KG in Biberach hergestellt und vertrieben. "Eltimid" ist eine eingetragene Marke der Anmelderin. Bei Eltimid handelt es sich um einen Werkstoff, der aus einem nicht aufschmelzbaren Pulver durch Pressformen hergestellt wird. Dieses Pulver ist ein aromatisches Polyimid mit der CAS-Nummer 845621-44-5. (Die CAS-Nummer (auch CAS-Registrierungsnummer und CAS-Registernummer, engl. CAS Registry Number, CAS = Chemical Abstracts Service) ist ein internationaler Bezeichnungsstandard für chemische Stoffe. Für jeden bekannten chemischen Stoff (auch Biosequenzen, Legierungen, Polymere) existiert somit eine eindeutige CAS-Nummer. Unter dieser Nummer ist das Pulver und somit auch der Werkstoff Eltimid registriert und ist insoweit unveränderlich definiert.

Der Hersteller dieses Pulvers mit der CAS-Nummer 845621-44-5, die Firma Evonik Industries AG, aus dem die Halbfabrikate oder die fertigen Lagerelemente hergestellt werden, bezeichnet das Pulver bzw. das Rohmaterial auch mit der Nummer P84 NT1. Aus diesem Rohmaterial werden dann durch Pressformen die Lagerelemente, welche die erfindungsgemäße Lageranordnung bilden, hergestellt. Diese werden als Eltimid bezeichnet.

Die Materialeigenschaften von Eltimid sind insbesondere folgende:

| Materialeigenschaften Eltimid für DF & HCM Teile | | | | | | | | |
|---|---|---|---|---|---|---|---|---|
| | | | | | | | | |
| Eigenschaft | Bedingungen | Prüfnorm | Einheit | Eltimid (DF-Teil) | Eltimid 15G (DF-Teil) | Eltimid (HC M-Teil) | Eltimid 15G (HC M- | Eltimid 15M (HC M- |
| | | | | | | | Teil) | Teil) |
| Dichte | | DIN 53479 | g/c m³ | 1,282 | 1,365 | 1,38 | 1,46 | 1,54 |
| Shore D Härte | | DIN 53505 | - | 84 | 83 | 90 | 87 | |
| Rockwell Härte | | ISO 2039-2 "R" | RH | R 60 | R 63 | | | |
| | | ISO 2039-2 "E" | RH | | | E 94 | | |
| Wasseraufnahme | 24 Std. bei 80°C | ISO 62 | % | 2,6 | 1,6 | 1,7 | | |
| | 48 Std. bei 80°C | | | 3,3 | 2,2 | 2,2 | | |
| | 3 Wochen bei 80°C | | | 4,5 | 3,7 | 3,2 | | |
| Formbeständigkeits-Temperatur HDT | | Methode Af bei 1,8 MPa | °C | 310 | 351 | 325 | | |
| | | Methode B bei 0,45 MPa | | 356 | 382 | 373 | 384 | |
| Glasüber-gangstempera-tur T_{G} | 1 Hz | DTMA (Hauptmaxmum von tan δ) | °C | 391,8 | 383,5 | 370 | | |
| | | Dynamische Differenzka-lometrie (DDK) | | 325,6 | | 337 | | |
| Klimawechsel-festigkeit | Testzyklus: +80°C / -40°C bei 50 Zyklen | PV 1200 | % | Ø + 0,2 Höhe + 0,6 | Ø + 0,2 Höhe + 0,4 | | | |
| **Elektrische Eigenschaften** | | | | | | | | |
| | | | | | | | | |
| Elektrische Durchschlags-festigkeit (DC) | | ISO 60243-1 | kV/ mm | 34,4 | | 21,8 | | |
| Relative Die-lektrizitätszahl (dielektrischer Verlustfaktor) | 50 Hz | IEC 60250 | - | 3,4 (4*10^{- 3}) | | 4,2 | | |
| | 1 kHz | | - | 3,4 (4*10^{- 3}) | | 4,2 | | |
| | 10kHz | | - | 3,4 (8*10^{- 3}) | | 4,1 | | |
| | 100kHz | | - | 3,4 (10*10 ⁻³) | | 4,1 | | |
| Spezifischer Oberflächenwiderstand | | IEC 60093 | Ω | 4,6*10 ¹⁵ | | 5*10^{1 5} | | |
| Spezifischer Durchgangs-widerstand | | IEC 60093 | Ω* m | 1,5*10 ¹³ | | 8*10^{1 3} | | |
| Kriechfestigkeit (CTI) | | IEC 60112 | - | 200 | | | | |
| | | | | | | | | |
| **Mechanische Eigenschaften** | | | | | | | | |
| | | | | | | | | |
| Zugfestigkeit | | ISO 527 | MPa | 74 | 65 | 107 | | 92 |
| Streckdehnung | | ISO 527 | % | 3,3 | 2,8 | 3,7 | | 3,2 |
| Zug-E-Modul | | ISO 527 | MPa | 3095 | 3939 | 3400 | | 4112 |
| Biegefestigkeit | bei 23°C | ISO 178 | MPa | 102 | 91 | 177 | 126 | 146 |
| | bei 200°C | | | | | 136 | | |
| Biegedehnung | bei 23°C | ISO 178 | % | 3,6 | 2,8 | 6,1 | 3 | 4,6 |
| | bei 200°C | | | | | 8,2 | | |
| Biege-E-Modul | bei 23°C | ISO 178 | MPa | 2994 | 3577 | 3750 | 4850 | 3788 |
| | bei 200°C | | | | | 3090 | | |
| | bei 250°C | | | 2062 | 2768 | 2300 | | |
| | bei 300°C | | | 1841 | 2542 | 2150 | | |
| Druckspannung | bei 1 % | | MP | | | | | |
| | Belastung | | a | | | | | |
| | bei 10 % Belastung | | | 128 | 127 | 105 | 83 | 164 |
| Druckfestigkeit | | ISO 604 | MP | 392 | 189 | 470 | 209 | 296 |
| | | | a | | | | | |
| Druck-E-Modul | | ISO 604 | MP | 1648 | 1686 | 1960 | 2111 | 2047 |
| | | | a | | | | | |
| Druckdehnung | | ISO 604 | % | 59 | 30 | 58 | 23 | 46 |
| Schlagzähigkeit | Charpy-Kerbschlagzähigkeit | ISO179-1/1eA | kJ/ m² | 3,1 | 1,6 | 5,9 | | |
| | Charpy-Schlagzähigkeit | ISO179-1/1eU | | 18,3 | 11 | 40 | | |
| Haftreibungszahl | v = 0,0025m/s; gegen Stahl gehärtet & geschliffen | ASTM D1894 | µ_{H} | 0,29 | 0,23 | | | |
| Gleitreibungszahl | v = 0,0025m/s; gegen Stahl gehärtet & geschliffen | ASTM D1894 | µ_{G} | 0,25 | 0,20 | | | |
| | | | | | | | | |
| **Thermische Eigenschaften** | | | | | | | | |
| | | | | | | | | |
| Thermischer Längenausdehnungskoeffizient | 50 - 200°C | DIN 53752 | 10⁻ | 53 | 40 | 54 | 41 | |
| | 200 - 300°C | | ⁶/K | 66 | 50 | 61 | 45 | |
| Spezifische Wärmekapazität | | ISO 527 | J/g* K | 0,98 | 0,97 | 0,925 | 1,046 | |
| Wärmeleitzahl | | ISO 8302 bei 40°C | W/ m*K | 0,23 | 0,49 | 0,22 | | |
| Brennbarkeit | | UL 94 | - | V 0 | | | | |

Die Bezeichnung 15G bedeutet, dass der Werkstoff einen 15 Gew.-% Anteil Graphit aufweist, die Bezeichnung 15M, dass der Werkstoff einen 15 Gew.-% Anteil Molybdändisulfid (MoS₂) aufweist. Beides sind Zugaben zu dem aromatischen Polyimid mit der CAS-Nummer 845621-44-5 und wirken als Schmierstoff. Ein Schmieren des Lagers ist dann nicht mehr notwendig, da das Lager dann selbstschmierend ist.

Das Pressformen erfolgt grundsätzlich in 2 Varianten, nämlich entweder dem Heißkompressionsformen (Hot Compression Moulding, kurz HCM) oder dem Direktformen (Direct Forming, kurz DF). Beim Heißkompressionsformen erfolgt eine Verbindung des Pulvers durch Druck und Temperatur über einen gewissen Zeitraum, z.B. bei einer Temperatur zwischen 300°C bis 400°C, bei einem Druck von z.B. 300kg/cm² bis zu 500kg/cm² und über einen Zeitraum von ca. 5 - 15 Stunden. Beim Direktformen erfolgt eine Verbindung der Pulverkörner bei Zimmertemperatur rein über einen sehr hohen Druck, z.B. 1,0 bis 5,0 t/cm², wodurch eine Art Vorversinterung statt findet. Die Teilchen halten in erster Linie durch Adhäsion zusammen. Eltimid besteht daher aus dem aromatischen Polyimid mit der CAS-Nummer 845621-44-5, das durch Heißkompressionsformen oder Direktformen zusammenhält, bzw. zusammengebacken oder verpresst ist.

Unter dem Begriff "Lagerelement" sind hier die verschiedensten Bestandteile eines Lagers bzw. einer Lageranordnung zu verstehen. Hierzu gehören Außenringe und Innenringe eines Radiallagers, Lagerschalen eines Axiallagers, Wälzkörper wie beispielsweise Kugeln, Nadeln oder dergleichen, Käfige für Wälzkörper, etc. Da zumindest eines der beiden relativ zueinander beweglichen Lagerelemente aus Eltimid gebildet ist, welches eine geringere Dichte aufweist als Wälzlagerstahl oder beispielsweise der zum Bau von Lagern eingesetzte Keramikwerkstoff wie z. B. Siliziumnitrid (Si₃N₄), wird dadurch die gesamte Lageranordnung leichter. Durch die hierdurch verminderten Massenkräfte sind z. B. hohe Drehzahlen der Lageranordnung möglich.

Die Erfindung kann in vorteilhafter Weise bei einer Ausgestaltung der Lageranordnung als Gleitlager eingesetzt werden. Außerdem kann die Erfindung auch gut bei groß bauenden Lageranordnungen eingesetzt werden, wie sie beispielsweise für die Lagerung eines Förderbands oder ein Bauteil oder Ähnliches eingesetzt wird. Ein derartiges beweglich zu lagerndes Teil wird üblicherweise auf einer Walze gelagert, welche auf einem entsprechenden Stützlager angeordnet ist und hierauf rollen kann. Durch die entsprechend leichtere Bauweise durch Verwendung von Eltimid zur Herstellung eines der Lagerelemente kann dadurch das Gesamtgewicht der Lageranordnung reduziert werden. Solche im Bau eingesetzten Lager haben insbesondere den Vorteil, dass sie leicht und günstig sind (im Vergleich zu Stahl) und nicht rosten.

Ein besonders bevorzugtes Einsatzgebiet der vorliegenden Erfindung besteht in der Herstellung von Wälzlagern, welche mit mindestens einem Wälzkörper ausgerüstet sind. Hierzu zählen vorzugsweise Kugellager, Nadellager, Rollenlager oder Tonnenlager. Bei derartigen Lagern, welche in großen Stückzahlen hergestellt werden, wirkt es sich kostendämpfend aus, zumindest ein Lagerelement aus Eltimid herzustellen.

Ein besonderer Vorteil besteht darin, zumindest einen Wälzkörper aus Eltimid in der Lageranordnung vorzusehen. Dadurch kann die Laufruhe der Wälzkörper, insbesondere wenn alle der Wälzkörper aus Eltimid hergestellt werden, verbessert werden, da die geringere Dichte und damit die geringeren Massenkräfte der Wälzkörper sich günstig auf die Laufruhe auswirken. Dieser Vorteil wirkt sich insbesondere bei Rillenkugellagern aus, die nicht mit Stahl- oder Keramikkugeln betrieben werden, sondern mit Eltimidkugeln. Wenn die Wälzkörper, insbesondere Kugeln als Wälzkörper, aus Eltimid hergestellt werden, fällt dadurch außerdem weniger Materialabfall an als beim Herstellen von Stahlkugeln - die durch Schleifen hergestellt werden -, da die Eltimid-Wälzkörper durch Pressen in einer Pressmaschine hergestellt werden können. Dies führt zu erheblichen Kosteneinsparungen.

Ein besonderes Einsatzgebiet der vorliegenden Erfindung besteht bei Hybridlagern, bei denen mindestens eines der Lagerelemente aus Stahl, Keramik, Eltimid oder einer Kombination hieraus hergestellt ist. Durch die Kombination verschiedener Materialien lassen sich die jeweiligen Vorteile der einzelnen Materialien kombinieren. So kann beispielsweise das Vorhandensein einer Kugel aus Keramik eine gewisse "Selbstheilung" in verschmutzten Umgebungen hervorrufen. Bereits eine einzelne Keramikkugel kann die Laufbahnen frei von kleineren festen Verunreinigungen machen, indem sie diese Verunreinigungen dank ihrer Härte zermahlt. Die übrigen Kugeln können dann beispielsweise alle aus Eltimid hergestellt sein, wobei dann beispielsweise die anderen Lagerbestandteile aus Wälzlagerstahl bestehen.

Besonders bevorzugt ist es, wenn zumindest eines der aus Eltimid gebildeten Lagerelemente einen Anteil von bis zu 15 Gew.-% Molybdändisulfid (MoS₂) enthält. Hierdurch ist ein verbessertes Verschleißverhalten bzw. ein niedrigerer Reibungskoeffizient zu beobachten, da sich das durch Reibung freigesetzte Molybdändisulfid in die Oberfläche des Gegenlaufpartners - beispielsweise Stahl oder Keramik - einlagert und dadurch eine gegebenenfalls raue Oberfläche glättet. Das heißt mit anderen Worten, dass zwar zunächst der Verschleiß relativ hoch ist, jedoch mit zunehmender Laufzeit stark abnimmt, bis bei der Einlagerung in die Oberflächen der Gegenlaufpartner eine Sättigung eingetreten ist. Dieser Effekt ist besonders dann bedeutsam, wenn einerseits eine ansonsten gewünschte Schmierung ausfällt oder andererseits eine Schmierung, beispielsweise mit Fett, nicht erwünscht ist, weil dies zu unerwünschten Verunreinigungen führen würde. Mögliche Einsatzgebiete hierfür ergeben sich beispielsweise in der Lebensmittelindustrie oder der Anlagentechnik.

Die durch die Zugabe von Molybdändisulfid zu dem Eltimid auftretenden Effekte können noch verstärkt bzw. optimiert werden, wenn statt 15 Gew.-% 25 Gew.-% oder 40 Gew.-% an Molybdändisulfid in dem Eltimid enthalten sind.

Eine ähnlich verbesserte Schmierwirkung kann erzielt werden, wenn zumindest eines der Lagerelemente aus Eltimid einen Anteil von 15 Gew.-% oder 25 bis 40 Gew.-% an Graphit enthält. Durch eine geeignete Kombination des Anteils an Graphit und des Anteils an Molybdändisulfid kann gegebenenfalls eine Optimierung der Reibungs- bzw. Verschleißeigenschaften erzielt und damit die Betriebsdauer einer entsprechend ausgebildeten Lageranordnung erhöht werden.

Die Erfindung manifestiert sich auch in einem neuartigen Verfahren zur Herstellung einer Lageranordnung, indem für die Herstellung zumindest eines der Lagerelemente wie beispielsweise einer Lagerschale, Wälzkörpern oder Käfigen für solche Wälzkörper der Werkstoff Eltimid verwendet wird. Entsprechende Lagerelemente können dann durch einen Pressvorgang in einer Pressmaschine hergestellt werden und müssen nicht wie bei Stahl durch spanabhebende Bearbeitung erzeugt werden. Die z. B. bei der Herstellung von Kugeln auftretenden bzw. aufzubringenden Presskräfte sind dabei je nach Kugelgeometrie unterschiedlich. So konnten in der Praxis beispielsweise Kugeln mit einem Durchmesser von 11,3 mm in einer Pressmaschine mit einem Druck von etwa 200 MPa in sehr guter Qualität hergestellt werden.

Ein der vorliegenden Erfindung zugrundeliegender wesentlicher Gedanke liegt nicht zuletzt darin begründet, dass Eltimid für die Herstellung zumindest eines Teils einer Lageranordnung verwendet wird. Es wurde bisher an keiner Stelle vorgeschlagen, Eltimid für die Herstellung eines Lagerelements oder sogar von ganzen Lageranordnungen zu verwenden. Auch entsprechende Hinweise bzw. Anregungen für den Fachmann, Eltimid für die Herstellung von Lageranordnungen oder Elementen hiervon zu verwenden, sind nicht bekannt.

Weitere Vorteile, Merkmale und Besonderheiten der vorliegenden Erfindung ergeben sich aus der nachfolgenden Beschreibung vorteilhafter Ausführungsformen der Erfindung. Es zeigen:
- Fig. 1: einen schematischen Schnitt durch eine erste Ausführungs- form der Erfindung in Form eines Axial-Schrägkugellagers,
- Fig. 2: einen schematischen Schnitt durch eine zweite Ausführungs- form der Erfindung in Form eines Radial-Rillenkugellagers,
- Fig. 3: einen schematischen Schnitt durch eine dritte Ausführungs- form der Erfindung in Form eines Gleitlagers und
- Fig. 4: einen schematischen Schnitt durch eine vierte Ausführungs- form der Erfindung in Form eines Brückenlagers.

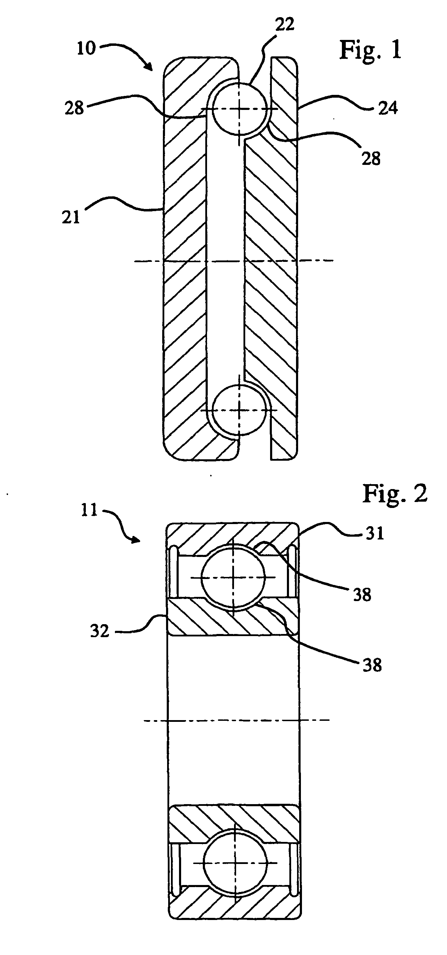

Fig. 1 zeigt ein Axial-Schrägkugellager 10 mit einer hier links dargestellten ersten Lagerschale 21 und einer hier rechts dargestellten zweiten Lagerschale 24. Die beiden Lagerschalen 21, 24 sind aus Wälzlagerstahl hergestellt und bilden eine Kugellaufbahn 28, in denen Kugeln 22 abrollen können. Die Kugeln 22 sind aus Eltimid hergestellt, welche einen Anteil von 15 Gew.-% Molybdändisulfid aufweisen. Die Kugeln 22 weisen eine Dichte von ca. 1,3 g/cm³ auf, welche wesentlich geringer als diejenige von Stahl (7,85 g/cm³) und Keramik (3,2 g/cm³) ist. Hierdurch treten bei einer Drehung des Axiallagers 10 geringere Massenkräfte auf, wodurch hohe Drehzahlen des Lagers möglich werden. Außerdem ist die Laufruhe derartiger Kugeln sehr groß. Der Anteil an Molybdändisulfid in den Kugeln 22 führt dazu, dass selbst bei einem Ausfall der Schmierung gute Laufeigenschaften des Lagers über längere Zeit gegeben sind. Das durch den anfänglichen Abrieb der Kugeln 22 freigesetzte Molybdändisulfid lagert sich an den Oberflächen der Kugellaufbahn 28 in den Lagerschalen 21, 24 an und bewirkt ein verschleißarmes, reibungsarmes Abrollen der Kugeln 22 auf der Kugellaufbahn 28.

Fig. 2 zeigt ein Radial-Rillenkugellager 11 mit einer äußeren Lagerschale 31 und einer inneren Lagerschale 32. Die beiden Lagerschalen 31, 32 bilden zusammen eine Kugellaufbahn 38, auf der Kugeln 22 abrollen können. Während die äußere Lagerschale 31 und die Kugeln 22 bei dieser zweiten Ausführungsform aus Wälzlagerstahl gebildet sind, ist die innere Lagerschale 32 aus Eltimid hergestellt, das 40 Gew.-% Molybdändisulfid enthält. Dieses Radialkugellager 11 wird ohne Fettschmierung betrieben. Durch Abrollen der Stahlkugeln 22 auf der Kugellaufbahn 38 der inneren Lagerschale 32 wird Letztere anfangs leicht abgerieben, wodurch Molybdändisulfid freigesetzt wird. Dieses Molybdändisulfid lagert sich an den Kugeln 22 und der Kugellaufbahn 38 der äußeren Lagerschale 31 an und führt nach kurzer Zeit zu einem hervorragenden, reibungsarmen und damit verschleißarmen Abrollverhalten der Kugeln 22 in der Kugellaufbahn 38.

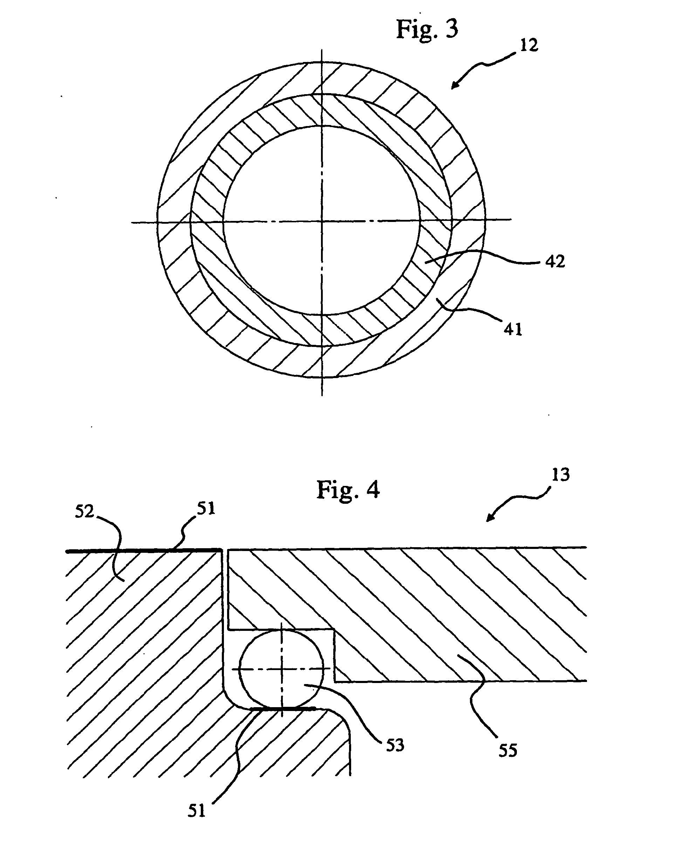

Fig. 3 zeigt ein Radialgleitlager 12 mit einer äußeren Gleitlagerschale 41 und einer inneren Gleitlagerschale 42. Die innere Gleitlagerschale 42 ist aus Wälzlagerstahl hergestellt, während die äußere Gleitlagerschale 41 aus Eltimid hergestellt ist. Das Eltimid enthält einen Anteil von 15 Gew.-% Graphit und einen Anteil von 15 Gew.-% Molybdändisulfid. Nach anfänglichem Abrieb des Eltimids führen die ebenfalls mit abgeriebenen Gewichtsanteile an Graphit und Molybdändisulfid nach kurzer Zeit zu einer optimalen Schmierung bei der Rotation der äußeren Lagerschale 41 relativ zur inneren Lagerschale 42.

Fig. 4 zeigt eine Lageranordnung 13 für die Lagerung eines Bauteils 55 auf einem Auflager 52, z. B. die Lagerung eines schwenkbaren Werkzeugtischs bei einer Maschine. An der Oberseite des Auflagers 52 befindet sich eine Lagerschicht 51 aus Eltimid. In dem Eltimid können Anteile an Molybdändisulfid und/oder Graphit enthalten sein, wodurch eine Schmierung dieser Lageranordnung 13 mittels Fett vermieden werden kann. Zwischen der Lagerschicht 51 und dem Bauteil 55 ist eine Walze 53 aus beispielsweise Stahl angeordnet. Bei einer beispielsweise durch Längenausdehnung oder Belastung hervorgerufenen Bewegung des Bauteils 55 nach links oder rechts kann der Bauteil 55 auf der Walze 53 abrollen und versetzt dadurch die Walze 53 in eine Rollbewegung, welche die Walze 53 auf der Lagerschicht 51 ausführt. Diese Lageranordnung 13 ist wartungsarm, da sie nicht geschmiert und damit auch nicht nachgeschmiert zu werden braucht. Sie lässt sich günstig herstellen, leicht verbauen und rostet nicht.

Graphit hat ähnliche "Schmier"-Eigenschaften wie Molybdändisulfid. Allerdings ist das bessere Haftvermögen des Molybdändisulfids an Metallflächen gegenüber dem Graphit hervorzuheben. Dies ist bedingt durch die Nebenvalenzen des Schwefels, wobei hier jedoch besonders darauf hinzuweisen ist, dass es sich keineswegs etwa um freien Schwefel mit seinen bekannten unangenehmen Nebenerscheinungen handelt. Der Schwefel ist im Molybdändisulfid-Molekül fest gebunden, sodass er unter keinen Umständen frei wird, es sei denn, bei der Zersetzungstemperatur von etwa 450°C bei vollem Luftzutritt.

Ein weiterer Vorteil gegenüber dem Graphit liegt darin, dass der Graphit in der Regel erst bei höheren Temperaturen sowie im Vakuum schmierwirksam wird. Dies ist dadurch zu erklären, dass die Bindung des Graphits auf metallischen Flächen adsorptiv mit Flüssigkeitsfilmen erfolgt. Es konnte so nachgewiesen werden, dass vollkommen entgastem Graphit keine Schmierwirkung mehr zukommt. Sein Reibungskoeffizient von etwa 0,1 steigt dann auf Werte, wie sie bei Metallen üblich sind.

Darüber hinaus ist Molybdändisulfid absolut ungiftig. Aufgrund eingehender wissenschaftlicher Untersuchungen wurde festgestellt, dass es sich bei Molybdändisulfid um eine der unlöslichsten Verbindungen überhaupt handelt, die nur von Chlor, Fluor, Königswasser und kochender Salz- oder Salpetersäure angegriffen wird. Bei der Verwendung von Molybdändisulfid-Schmiermitteln sind daher keine besonderen Schutzvorkehrungen zu treffen. Es besteht auch keine Gefahr bei der Lagerung dieser Substanzen.

Die Materialeigenschaften von Eltimid gemäß einem bevorzugten Ausführungsbeispiel sind in der folgenden Tabelle aufgelistet:

| **Allgemeine Eigenschaften** | | | | |
|---|---|---|---|---|
| **Eigenschaft** | **Eltimid^{®} (DF-Teil)** | **Eltimid^{®} 15G (DF-Teil)** | **Eltimid^{®} (HCM-Teil)** | **Eltimid^{®} 15G (HCM-Teil)** |
| Dichte [g/cm³] | 1,282 | 1,365 | 1,38 | 1,46 |
| Shore D Härte | 84 | 83 | 90 | 87 |
| Rockwell Härte [RH] | R 60 | R 63 | | |
| Wasseraufnahme | 4,5 | 3,7 | 3,2 | |
| [%] | | | | |
| 3 Wochen bei 80°C | | | | |
| Formbeständigkeits- | 356 | 382 | 373 | 384 |
| Temperatur HDT [°C] | | | | |
| bei 0,45 MPa | | | | |
| Glasübergangstem- | 391,8 | 383,5 | 370 | |
| peratur T_{G} [°C] | | | | |
| Klimawechselfestig | Ø + 0,2 Höhe | Ø +0,2 Höhe | | |
| keit [%] | +0,6 | +0,4 | | |

| **Elektrische Eigenschaften** | | | | |
|---|---|---|---|---|
| **Eigenschaft** | **Eltimid^{®} (DF-Teil)** | **Eltimid^{®} 15G (DF-Teil)** | **Eltimid^{®} (HCM-Teil)** | **Eltimid^{®} 15G (HCM-Teil)** |
| Elektrische Durch-schlagsfestigkeit (DC) [kV/mm] | 34,4 | | 21,8 | |
| Relative Dielelektrizitätszahl (bei 50 Hz) | 3,4 (4*10⁻³) | | 4,2 | |
| Spezifischer Oberflächenwiderstand [Ω] | 4,6*10¹⁵ | | 5*10¹⁵ | |
| Spezifischer Durchgangswiderstand [Ω] | 1,5*10¹³ | | 8*10¹³ | |
| Kriechfestigkeit | 200 | | | |

| **Mechanische Eigenschaften** | | | | |
|---|---|---|---|---|
| **Eigenschaft** | **Eltimid^{®} (DF-Teil)** | **Eltimid^{®} 15G (DF-Teil)** | **Eltimid^{®} (HCM-Teil)** | **Eltimid^{®} 15G (HCM-Teil)** |
| Zugfestigkeit [MPa] | 74 | 65 | 107 | |
| Streckdehnung [%] | 3,3 | 2,8 | 3,7 | |
| Zug-E-Modul [MPa] | 3095 | 3939 | 3400 | |
| Biegefestigkeit bei | 102 | 91 | 177 | |
| 23°C [MPa] | | | | |
| Biegedehnung bei | 3,6 | 2,8 | 6,1 | |
| 23°C [MPa] | | | | |
| Biege-E-Modul bei | 2994 | 3577 | 3750 | |
| 23°C [MPa] | | | | |

"Eltimid 15G" ist ein Eltimid-Werkstoff mit einem Anteil von 15 % Graphit. Ein "DF-Teil" ist ein aus direkter Formung gewonnenes Teil, während ein "HCM-Teil" ein Teil ist, das mittels einer Pressformung unter höherer Temperatur gewonnen wurde (Hot Compression Moulding).

Eltimid ist gegenüber einer Vielzahl von Chemikalien beständig, wie beispielsweise Benzin, Diesel, Motoröl, Kühlflüssigkeit, Frostschutzmittel, Bremsflüssigkeit, Schwefelsäure, Spiritus usw. Eltimid weist eine amorphe Struktur auf und ist auch gegenüber hohen Temperaturen beständig. Eltimid widersteht Dauergebrauchstemperaturen von bis zu 260°C und ist kurzfristig bis zu 400°C belastbar. Es hat exzellente mechanische und tribologische Eigenschaften und zeichnet sich - wie aus vorliegenden Tabellen ersichtlich wird - durch eine hohe Festigkeit bei guter Zähigkeit aus und ist ein hervorragender elektrischer Isolator. Auch die Klimawechselfestigkeit und die chemische Beständigkeit sind gegenüber einer Vielzahl anderer Kunststoffe überragend. Eltimid hat in vielen Eigenschaftsbereichen ähnliche Werte wie Metall, Keramik oder Quarz und eignet sich deshalb als Ersatz für diese. Durch den Zusatz Molybdändisulfid erzielt der Kunststoff zusätzlich die hervorragenden Lagereigenschaften.

Gegenüber Wälzlager aus Stahl oder Siliziumnitrid zeichnet sich Eltimid durch einen geringeren spezifischen elektrischen Widerstand und eine geringere Dichte aus. Somit liegt Eltimid beim spezifischen elektrischen Widerstand unter 10¹² Ωm und bei der Dichte unter 3,2 g/cm³, nämlich bei etwa 1,3 g/cm³.

Es ist festzuhalten, dass die unter Bezug auf die dargestellten und beschriebenen Ausführungsformen beschriebenen Merkmale der Erfindung, wie beispielsweise die Art und spezifische Ausgestaltung der einzelnen Lageranordnungen, der Zusatz von schmierenden Bestandteilen wie Graphit und Molybdändisulfid sowie die Auswahl, welches der Lagerelemente aus Eltimid hergestellt ist, auch bei anderen Ausführungsformen vorhanden sein können, außer wenn es nicht anders angegeben ist oder es sich aus technischen Gründen von selbst verbietet.

Zwei bevorzugte Ausführungsformen des Pressformens werden wie folgt erläutert: Beim Heißkompressionsformen erfolgt eine Verbindung des Pulvers mit der CAS-Nummer 845621-44-5 durch Druck und Temperatur über einen gewissen Zeitraum, bevorzugt bei einer Temperatur zwischen 200°C bis 400°C, besonders bevorzugt bei einer Temperatur zwischen 280°C bis 380°C, besonders bevorzugt bei ca. 350°C. Bevorzugt wird dabei ein Druck von ca. 400kg/cm² über einen bevorzugten Zeitraum von ca. 7 - 12 Stunden, besonders bevorzugt ca. 9 Stunden. Beim Direktformen erfolgt eine Verbindung der Pulverkörner bei Zimmertemperatur rein über einen sehr hohen Druck, bevorzugt bei 3,0 bis 4,0 t/cm², besonders bevorzugt ca. 3,5 t/cm². Es empfiehlt sich, das Material dann noch in einem Ofen zu härten, z.B. bei etwa 300°C über einen Zeitraum von mehreren Stunden, z.B. 1-10 Stunden, bevorzugt etwa 7 Stunden. Falls Schmiermittel wie Graphit oder Molybdändisulfid zugegeben werden, so erfolgt dies ebenfalls in Pulverform vor dem Pressformen.

### Bezugszeichenliste

- 10 - 13: Lageranordnung
- 21: linke Lagerschale
- 22: Kugel
- 24: rechte Lagerschale
- 28: Kugellaufbahn
- 31: äußere Lagerschale
- 32: innere Lagerschale
- 38: Kugellaufbahn
- 41: äußere Lagerschale
- 42: innere Lagerschale
- 51: Lagerschicht
- 52: Auflager
- 53: Walze
- 55: Brückenteil

## Patentansprüche

1. Wälzlageranordnung (10; 11), mit zumindest einem ersten Lagerelement (21; 31) und zumindest einem relativ zum ersten Lagerelement (21; 31) beweglichen, als Wätzkörper (22) ausgebildeten zweiten Lagerelement (22; 24; 32), wobei, die Wälzlageranordnung (10; 11) ein Hybridlager ist, bei dem mindestens eines der Lagerelemente (21; 22; 24; 31; 32) aus Stahl und/oder Keramik hergestellt ist, **dadurch gekennzeichnet, dass** zumindest eines der Lager-elemente (21; 22; 24; 31; 32) aus Eltimid gegebenenfalls mit Zusätzen von Molybdänsulfid und/oder Graphit hergestellt ist, wobei Eltimid ein aromatisches Polyimid mit der CAS-Nummer 845621-44-5 ist.

2. Wälzlageranordnung (10; 11) nach Anspruch 1,
**dadurch gekennzeichnet, dass** das Wälzlager ein Kugellager, ein Nadellager,
ein Rollenlager oder ein Tonnenlager ist.

3. Wälzlageranordnung (10; 11) nach Anspruch 1 oder 2,
**dadurch gekennzeichnet, dass** mindestens ein Wälzkörper (22) aus Eltimid hergestellt ist.

4. Wälzlageranordnung (10; 11) nach einem der vorhergehenden Ansprüche,
**dadurch gekennzeichnet, dass** das zumindest eine Lagerelement (21; 22; 24; 31; 32) aus Eltimid bis zu 40 Gew.-% Molybdändisulfid enthält.

5. Wälzlageranordnung (10; 11) nach Anspruch 4,
**dadurch gekennzeichnet, dass** das zumindest eine Lagerelement (21; 22; 24; 31; 32) aus Eltimid bis zu 25 Gew.-%, besonders bevorzugt ca. 15 % Molybdändisulfid enthält.

6. Wälzlageranordnung (10; 11) nach einem der vorhergehenden Ansprüche, **dadurch gekennzeichnet, dass** das zumindest eine Lagerelement (21; 22; 24; 31; 32) aus Eltimid bis zu 40 Gew.-% Graphit enthält.

7. Wälzlageranordnung (10; 11) nach Anspruch 6,
**dadurch gekennzeichnet, dass** das zumindest eine Lagerelement (21; 22; 24; 31; 32) aus Eltimid bis zu 25 Gew.-%, besonders bevorzugt ca. 15 % Graphit enthält.

8. Verfahren zur Herstellung einer Wälzlageranordnung (10; 11) nach einem der vorhergehenden Ansprüche,
**dadurch gekennzeichnet, dass** Eltimid sowie Stahl und/oder Keramik für die Herstellung zumindest eines der Lagerelemente (21; 22; 24; 31; 32) verwendet wird.

9. Verwendung von Eltimid sowie Stahl und/oder Keramik für die Herstellung zumindest eines Teils einer Wälzlageranordnung (10; 11) nach einem der Ansprüche 1 bis 7.

## Claims

1. A rolling bearing assembly (10; 11) having at least a first bearing element (21; 31) and at least a second bearing element (22; 24; 32) formed as a rolling body (22), which is movable in relation to the first bearing element (21; 31), the rolling bearing assembly (10; 11) being a hybrid bearing having at least one of the bearing elements (21; 22; 24; 31; 32) which is produced of steel and/or ceramics, **characterized in that** at least one of the bearing elements (21; 22; 24; 31; 32) is produced of eltimid, occasionally supplemented by molybdenum sulphide and/or graphite, wherein eltimid is an aromatic polyimide having the CAS number 845621-44-5.

2. The rolling bearing assembly (10; 11) according to claim 1,
**characterized in that** the rolling bearing is a ball bearing, a needle bearing, a roller bearing or a spherical roller bearing.

3. The rolling bearing assembly (10; 11) according to claim 1 or 2,
**characterized in that** at least one rolling body (22) is produced of eltimid.

4. The rolling bearing assembly (10; 11) according to one of the preceding claims, **characterized in that** the at least one bearing element (21; 22; 24; 31; 32) of eltimid contains up to 40 % by weight of molybdenum disulphide.

5. The rolling bearing assembly (10; 11) according to claim 4,
**characterized in that** the at least one bearing element (21; 22; 24; 31; 32) of eltimid contains up to 25 % by weight, especially preferred about 15 % by weight of molybdenum disulphide.

6. The rolling bearing assembly (10; 11) according to one of the preceding claims, **characterized in that** the at least one bearing element (21; 22; 24; 31; 32) of eltimid contains up to 40 % by weight of graphite.

7. The rolling bearing assembly (10; 11) according to claim 6,
**characterized in that** the at least one bearing element (21; 22; 24; 31; 32) of eltimid contains up to 25 % by weight, especially preferred about 15 % by weight of graphite.

8. A process for the production of a rolling bearing assembly (10; 11) according to one of the preceding claims,
**characterized in that** eltimid as well as steel and/or ceramics is used for the production of at least one of the bearing elements (21; 22; 24; 31; 32).

9. Use of eltimid as well as steel and/or ceramics for the production of at least one part of a rolling bearing assembly (10; 11) according to one of the claims 1 to 7.

## Revendications

1. Agencement formant palier à roulements (10; 11), comprenant au moins un premier élément de palier (21; 31) et au moins un second élément de palier (22; 24; 32) mobile par rapport au premier élément de palier (21; 31) et réalisé sous forme de corps à roulements (22), dans lequel l'agencement formant palier à roulements (10; 11) est un palier hybride dans lequel l'un au moins des éléments de palier (21; 22; 24; 31; 32) est produit en acier et/ou en céramique, **caractérisé en ce que** l'un au moins des éléments de palier (21; 22; 24; 31; 32) est produit en matériau connu sous la marque "Eltimid®", le cas échéant avec addition de sulfure de molybdène et/ou de graphite, dans lequel le Eltimid® est un polyimide aromatique désigné sous le numéro CAS 845621-44-5.

2. Agencement formant palier à roulements (10; 11) selon la revendication 1, **caractérisé en ce que** le palier à roulements est un palier à billes, un palier à aiguilles, un palier à rouleaux, ou un palier à rouleaux bombés.

3. Agencement formant palier à roulements (10; 11) selon la revendication 1 ou 2,
**caractérisé en ce qu'**au moins un corps à roulements (22) est produit en Eltimid®.

4. Agencement formant palier à roulements (10; 11) selon l'une des revendications précédentes,
**caractérisé en ce que** ledit au moins un palier à roulements (21; 22; 24; 31; 32) en Eltimid® contient jusqu'à 40 % en poids de bisulfure de molybdène.

5. Agencement formant palier à roulements (10; 11) selon la revendication 4,
**caractérisé en ce que** ledit au moins un élément de palier (21; 22; 24; 31; 32) en Eltimid® contient jusqu'à 25 % en poids et de façon particulièrement préférée environ 15 % en poids de bisulfure de molybdène.

6. Agencement formant palier à roulements (10; 11) selon l'une des revendications précédentes,
**caractérisé en ce que** ledit au moins un élément de palier (21; 22; 24; 31; 32) en Eltimid® contient jusqu'à 40 % en poids de graphite.

7. Agencement formant palier à roulements (10; 11) selon la revendication 6,
**caractérisé en ce que** ledit au moins un élément de palier (21; 22; 24; 31; 32) en Eltimid® contient jusqu'à 25 % en poids et de manière particulièrement préférée environ 15 % en poids de graphite.

8. Procédé pour la production d'un agencement formant palier à roulements (10; 11) selon l'une des revendications précédentes,
**caractérisé en ce que** l'on utilise du Eltimid® ainsi que de l'acier et/ou de la céramique pour la production de l'un au moins des éléments de palier (21; 22; 24; 31; 32).

9. Utilisation de Eltimid® ainsi que d'acier et/ou de céramique pour la production d'au moins une partie d'un agencement formant palier à roulements (10; 11) selon l'une des revendications 1 à 7.
